(19) Europäisches Patentamt
European Patent Office
Office européen des brevets

(11) **EP 1 627 085 B1**

(12) **EUROPÄISCHE PATENTSCHRIFT**

(45) Veröffentlichungstag und Bekanntmachung des Hinweises auf die Patenterteilung:
**10.01.2007 Patentblatt 2007/02**

(21) Anmeldenummer: **04729097.8**

(22) Anmeldetag: **23.04.2004**

(51) Int Cl.:
*C21C 5/52* *(2006.01)*   *C21C 5/56* *(2006.01)*
*C21C 7/00* *(2006.01)*   *C22B 34/32* *(2006.01)*

(86) Internationale Anmeldenummer:
**PCT/EP2004/004313**

(87) Internationale Veröffentlichungsnummer:
**WO 2004/104233 (02.12.2004 Gazette 2004/49)**

(54) **VERFAHREN ZUR RÜCKGEWINNUNG VON METALLISCHEN ELEMENTEN, INSBESONDERE METALLISCHEM CHROM, AUS METALLOXIDHALTIGEN SCHLACKEN IM ELEKTROLICHTBOGENOFEN**

METHOD FOR RECOVERING METALLIC ELEMENTS, ESPECIALLY METALLIC CHROMIUM, FROM SLAG CONTAINING METAL OXIDES IN AN ELECTRIC-ARC FURNACE

PROCEDE DE RECUPERATION D'ELEMENTS METALLIQUES, NOTAMMENT DE CHROME METALLIQUE, A PARTIR DE LAITIERS CONTENANT DES OXYDES METALLIQUES, DANS UN FOUR A ARC ELECTRIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **24.05.2003 DE 10323507**

(43) Veröffentlichungstag der Anmeldung:
**22.02.2006 Patentblatt 2006/08**

(73) Patentinhaber: **SMS Demag Aktiengesellschaft**
**40237 Düsseldorf (DE)**

(72) Erfinder:
• **ROLLINGER, Bernt**
**65232 Taunusstein (DE)**

• **REICHEL, Johann**
**40489 Düsseldorf (DE)**

(74) Vertreter: **Klüppel, Walter et al**
**Patentanwälte Hemmerich & Kollegen**
**Hammerstrasse 2**
**57072 Siegen (DE)**

(56) Entgegenhaltungen:
WO-A-00/75385          WO-A-00/79014
WO-A-02/33130          DE-A- 19 643 459
US-B1- 6 478 840       US-B1- 6 544 471

**Beschreibung**

Die Erfindung betrifft ein Verfahren zur Rückgewinnung von metallischen Elementen, insbesondere metallischem Chrom, aus Schlacken, die Oxide, insbesondere Chromoxide, enthalten, in einem Elektrolichtbogenofen, einem Konverter sowie bei der Pfannenmetallurgie.

Beim Einschmelzen von metallischem Schrott in Elektrolichtbogenöfen kommt es zu Oxidationsvorgängen, wobei die metallischen Elemente der Schmelze zu Oxiden reagieren. Bei Edelstählen, wie chrom- und chromnickelhaltigen Stählen, ist es vor allem das teuere Chrom, welches oxidiert wird. Parallel hierzu werden die Oxide auch wieder reduziert. Bei hochchromhaltigen Stählen stellt vor allem die Chromoxidreduktion mit Kohlenstoff einen grundsätzlichen Mechanismus dar. Hierbei wird die primäre Oxidation des Chroms gleichzeitig mit dem in der Schmelze gelösten Kohlenstoff mit einer parallel verlaufenden Reduktion kompensiert. Diese Reaktion findet auf der Blasenoberfläche und an der Phasengrenze Metall/Schlacke statt. Das Produkt der Reaktionen, das metallische Chrom, wird in die Schmelze zurück geführt. Das entstehende Kohlenmonoxid wird nach Diffusion in Blasen an der Oberfläche in die Ofenatmosphäre abgeführt.

Folgende Reaktionen laufen ab:

$$\{O_2\} = 2[O] \text{ Dissoziation} \tag{1}$$

$$[C] + [O] = \{CO\} \text{ Direktentkohlung} \tag{2}$$

$$2[Cr] + 3[O] = (Cr_2O_3) \text{ Chromoxidation} \tag{3}$$

Die Reaktionen laufen unter dem folgenden thermodynamischen Gleichgewicht ab:

$$K(T) = \frac{a_{Cr}^{\,2}\, p_{CO}^{\,3}}{a_c^{\,3}\, a_{Cr_2O_3}} \tag{4}$$

wobei

$$\log K(T) = -\frac{40536}{T} + 25{,}63 + p \tag{5}$$

worin p ein Parameter ist.

Wegen der Unvollständigkeit der Chromreduktion mit dem Kohlenstoff gelangen Teilmengen des Chromoxids in Form von verschiedenen Spinellen in die Schlacke. Der Chromoxidgehalt in der Schlacke variiert abhängig von der Art der Prozessführung und liegt bei oberhalb von 5%. Die Wirtschaftlichkeit des Verfahrens beruht darauf, die Chromoxide zu reduzieren und das metallische Chrom zurückzugewinnen.

Hierfür wird üblicherweise am Ende der Einschmelzbehandlung eine separate Reduktion der Schlacke mit hochaffinem Silizium in Form von FeSi durchgeführt.

Aus der WO 00/79014 A1 ist bereits eine Lösung bekannt, um den Prozess der Rückgewinnung von metallischem Chrom aus Chromoxid enthaltenden Schlakken von Konverterprozessen oder Vakuumprozessen wirtschaftlicher zu machen. Es wird vorgeschlagen, den konventionellen Behandlungsschritt der Schlackenreduktion zu unterlassen. Die Schlacke, die beispielsweise nach einem Sauerstoffblasvorgang in einem Konverter oder in einer Pfanne vorhanden ist, wird unreduziert von der Metallschmelze entfernt und in einen vorgeschalteten Elektrolichtbogenofen chargiert. Mit einem Kohlenstoffzusatz und Silizium aus dem in den Elektrolichtbogenofen chargierten Schrott, ggf. mit Reststäuben, wird das Chromoxid in der Schlacke dann beim Einschmelzvorgang direkt zu metallischem Chrom reduziert.

Aus der WO 02/33130 A1 ist bekannt, in einem metallurgischen Gefäß, in dem sowohl ein Schmelz- wie auch ein Blasprozess durchgeführt wird, insbesondere beim Conarc-Verfahren, die Rückgewinnung des metallischen Chroms dadurch zu erreichen, dass die nach dem ersten Blasprozess entstandene Schlacke unreduziert im Gefäß verbleibt. Die Schlacke wird zusammen mit der nächsten Charge im gleichen Gefäß erhitzt, reduziert und anschließend abgestochen. Anschließend findet der nächste Blasprozess statt, wobei die entstehende Schlacke wiederum im Gefäß verbleibt.

Ausgehend von diesem Stand der Technik liegt der Erfindung die Aufgabe zugrunde, einen wirtschaftlichen Prozess der Rückführung von Oxiden, insbesondere von Chromoxiden, aus der Schlacke, die nach dem Einschmelzprozess in Elektrolichtbogenöfen entstanden ist, bereitzustellen.

Dies Ausgabe wird durch die Verfahren mit den Merkmalen des Anspruch 1 sowie 6 gelöst. Vorteilhafte Weiterbildungen des Verfahrens sind in den Unteransprüchen aufgeführt.

Grundgedanke der Erfindung ist der Verzicht der - bisher üblichen - Schlackenreduktion nach dem Schmelzen bei der ersten Schmelze. Der Behandlungsschritt der Schlackenreduktion wird erst während des zweiten Schmelzens einer zweiten Charge bzw. weiterer Chargen durchgeführt.

Im einzelnen laufen folgende Verfahrensschritte ab: Es wird eine Schrottcharge in den Elektrolichtbogenofen chargiert und diese unter Bildung einer Metallschmelze und Schlacke eingeschmolzen. Der nun herkömmlich ablaufende Reduktionsschritt der Schlacke unterbleibt. Die Schmelze wird abgestochen und die hochchromoxidhaltige und Mangan-Eisenoxid gesättigte Schlacke verbleibt unreduziert im Ofengefäß.

Auf diese Schlacke wird nun die nächste Charge gegeben. Diese Charge umfasst Schrott sowie Reduktionsmittel für die Schlacke, insbesondere Kohlenstoff und/oder Silizium. Es empfiehlt sich, Kohlenstoff und/oder Silizium in Form von kohlenstoff- und siliziumreichen Legierungsmaterialien zu zugeben. Kohlenstoff und Silizium sind beispielsweise in Chargechrom, Ferrochrom oder Ferronickel vorhanden. Sie decken den überwiegenden Teil der Reduktion ab. In bestimmten Fällen können zusätzliche Kohlenstoff- und/oder Siliziumzusätze, wie FeSi bzw. Aluminium zugegeben werden. Reduktionsmittel können auch in zugegebenen Reststäuben enthalten sein.

Mit Hilfe dieser Reduktionsmittel wird die Schlacke während des Schmelzvorgangs unter der elektrischen Energie direkt reduziert. Es findet im Elektroofen unter atmosphärischem Druck eine Direktreduktion des Chromoxids mit Kohlenstoff bzw. Silizium statt. Die bei dem Schmelzvorgang ablaufende Metalloxidation wird auf diese Weise durch Reduktionsreaktionen (über-)kompensiert und das metallische Chrom zurück gewonnen. Anschließend wird die Schlacke entfernt. Ein analoges Verfahren findet bei der Pfannenmetallurgie statt, wobei hier das Metall bereits als Schmelze vorliegt.

Die Durchführung im Elektrolichtbogenofen wird erheblich dadurch verbessert, dass das Verfahren nach der Arbeitsweise mit einem restlichen Metallsumpf durchgeführt wird. Durch einen Metallsumpf wird die Reduktionsqualität der Schlacke wesentlich erhöht. Hierbei wird die erste Schmelze nicht vollständig, sondern unter Verbleib eines Metallsumpfes im Schmelzgefäß nur teilweise abgestochen. Dies hat den Vorteil, dass die Schlacke auf diesem Metallsumpf schwimmend im Ofen verbleibt und somit nicht am Ofenboden festkleben bzw. anbacken kann. Für diese vorteilhafte Weiterentwicklung setzt sich eine Schmelzkampagne in eine Aufbauschmelzphase, eine Abbauschmelzphase sowie eine zeitlich dazwischen stattfindende sich wiederholende Phase des Einschmelzens und Reduzierens zusammen. Im Gegensatz zu dem bekannten Verfahren beim Conarc-Prozess, der sich aus dem Einschmelzen und Blasen mit Sauerstoff zur Herstellung von Stahl zusammensetzt, bezieht sich das vorliegende Verfahren auf die Rückgewinnung von Chrom bei dem Einschmelzen in einem Elektrolichtbogenofen, wobei der Prozess im Vergleich einfacher und kürzer ist. Auch die Chrom-Gehalte sind nicht vergleichbar; die Chromgehalte der Schlacke beim Einschmelzen sind niedriger und liegen etwa bei 14-15%.

Das vorgeschlagene Verfahren kommt insbesondere bei chrom- oder chromnickelhaltigen Edelstählen zur Anwendung. Abhängig von der Gesamttechnologie, d.h. einer Edelstahltechnologie ohne einer separaten Reduktionsbehandlung der Schlacke in einem Elektrolichtbogenofen, kann dieser Prozess kosten- und energieoptimal gestaltet werden. Für das Verfahren ist es unerheblich, ob sich die Schlacke in einem festen, flüssigen oder in einem Zwischenzustand befindet. Dies hat nur einen Einfluss auf die Einschmelzzeit und den Energieverbrauch in dem Elektrolichtbogenofen.

Die für die Reduktion beim Schmelzvorgang erforderliche Durchmischung wird vorzugsweise mittels Inertgasen erzeugt, die durch Boden-Spüler und/oder Seitendüsen im Elektrolichtbogenofen und/oder durch eine Top-Lanze eingebracht werden. Hierdurch wird die Reaktionsfläche zwischen Schlacke und Metall erhöht.

Insgesamt weist das vorgeschlagene Verfahren des weiteren folgende Vorteile auf:

- Verkürzung der gesamten Behandlungszeit der Schmelze bis zu 15 min je nach Technologieart, indem auf den bekannten separaten Reduktionsschritt verzichtet wird
- Senkung des FeSi-Verbrauchs
- Senkung des Verbrauchs an Schlackebildnern
- Hohes Metallschmelzeausbringen
- Erhöhte Lebensdauer des Feuerfest-Materials des Ofens
- Erhöhte Lebensdauer der Spülsteine/Spüler
- Verbesserter Energiehaushalt des Elektrolichtbogenofens
- Verbesserter Reinheitsgrad des Metalls

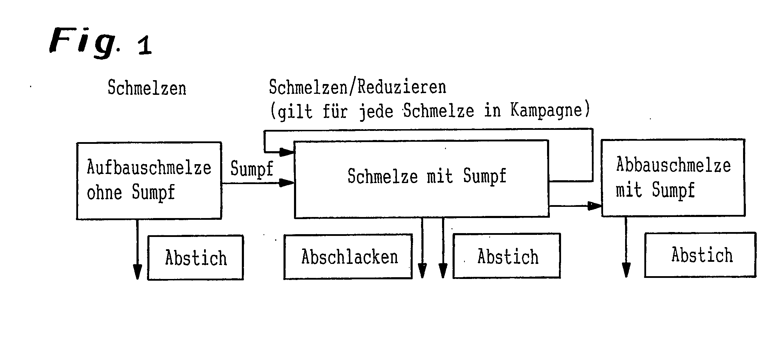

Die einzelnen Schritte des Verfahrens werden im Nachfolgenden detailliert anhand der einzigen Fig. beschrieben, die in Form eines Ablaufschemas die Metallführung im EAF- bzw. Elektrolichtbogenofen-Verfahren zeigt.

In einem ersten Schritt wird eine Aufbauschmelze ohne Sumpf erschmolzen. Hierzu wird eine Schrottcharge unter Bildung einer Metallschmelze und Schlakke eingeschmolzen. Die Schmelze wird abgestochen, allerdings nur zu einem Teil, so dass ein Metallsumpf mit darauf schwimmender Schlacke im Ofengefäß verbleibt. Die Schlacke ist unreduziert.

In der nun folgenden Schmelz- und Reduktionsphase wird Schrott auf diesen Metallsumpf mit Schlacke chargiert. Zudem werden Reduktionsmittel für die Schlacke, wie Kohlenstoff und Silizium, zugegeben. Während des Einschmelzvorgangs wird die Schlacke reduziert. Hierbei laufen die Reduktionsreaktionen

$$(Cr_2O_3) + 3[C] = 2[Cr] + 3\{CO\}$$

$$2(Cr_2O_3) + 3[Si] = 4[Cr] + 3(SiO_2)$$

mit Kohlenstoff bzw. mit Silizium ab. Hierbei wird der Chromoxidgehalt in der Schlacke auf Werte kleiner als der Eingangswert herabgesetzt.

Die jetzt reduzierte Schlacke wird abgestochen. Im weiteren Verlauf wird die Schmelze abgestochen, allerdings wieder nur teilweise unter Verbleib eines Metallsumpfes am Boden des Ofengefäßes. Auf diesen Metallsumpf wird erneut chargiert. Die sich wiederum bei dem Einschmelzen bildende Schlacke wird erneut direkt reduziert. Diese Schritte werden für jede Schmelze einer Kampagne wiederholt. Wenn die Kampagne beendet wird, erfolgt kein Teil-, sondern ein Vollabstich der Schmelze zusammen mit dem Metallsumpf.

Das Verfahren kann in einem Elektrolichtbogenofen oder anderen Schmelzöfen sowie in der Pfannen- oder Konvertermetallurgie oder anderen metallurgischen Gefäßen durchgeführt werden.

**Patentansprüche**

1. Verfahren zur Rückgewinnung von metallischen Elementen, insbesondere metallischem Chrom, aus Schlacken, die Oxide, insbesondere Chromoxide, enthalten, in einem Elektrolichtbogenofen mit den folgenden Schritten:

   a) Zuführen einer Charge in den Elektrolichtbogenofen,
   b) Einschmelzen der Charge unter Bildung einer Metallschmelze und Schlacke;
   c) Abstechen der Schmelze unter Verbleib der unreduzierten Schlakke im Ofengefäß;
   d) Zuführen einer weiteren Charge, die Schrott sowie Reduktionsmittel für die Schlacke, wie Kohlenstoff und/ oder Silizium und/oder Aluminium, aufweist,
   e) Einschmelzen und direkte Reduktion der Schlacke, insbesondere von Chromoxid, durch die Reduktionsmittel aus der Charge während des Schmelzvorgangs;
   g) Abstechen der Schmelze und der reduzierten Schlacke.

2. Verfahren nach Anspruch 1,
   **gekennzeichnet durch**
   das Einschmelzen einer Aufbauschmelze am Beginn einer Schmelzkampagne;
   einen Teilabstich der Schmelze beim Schritt c) unter Verbleib eines Metallsumpfes im Ofengefäß;
   eine Chargierung einer weiteren Charge auf den verbliebenen Metallsumpf und die Schlacke;
   einen Teilabstich der Metallschmelze nach erfolgter Erschmelzung und Reduktion der Schlacke;
   Wiederholung der Schritte des Chargierens, des Schmelzens und des Reduzierens der Schlacke für jede Schmelze der Kampagne oder Beendigung **durch** Vollabstich einer Abbauschmelze zusammen mit dem Metallsumpf.

3. Verfahren nach Anspruch 1 oder 2,
   **dadurch gekennzeichnet,**
   **dass** die Reduktionsmittel Kohlenstoff und/oder Silizium und/oder Aluminium in Form von Legierungsmaterialien mit hohem Kohlenstoff- und Siliziumgehalt chargiert werden.

4. Verfahren nach einem der Ansprüche 1 bis 3,
   **dadurch gekennzeichnet,**
   **dass** Reststäube als Reduktionsmittel für die insbesondere chromhaltige Schlacke chargiert werden.

5. Verfahren nach einem der Ansprüche 1 bis 4,
   **dadurch gekennzeichnet,**
   **dass** eine Durchmischung mittels Inertgasen erfolgt, die durch Boden-Spüler und/oder Seitendüsen im Elektrolichtbogenofen und/oder durch eine Top-Lanze eingebracht werden.

6. Verfahren zur Rückgewinnung von metallischen Elementen, insbesondere metallischem Chrom, aus Schlacken, die Oxide, insbesondere Chromoxide, enthalten, bei der Pfannen- oder Konvertermetallurgie mit den folgenden Schritten:

a) Zuführen einer ersten metallischen Schmelze mit Schlacke in eine Pfanne oder in einen Konverter,
b) Nach der Behandlung der Schmelze, insbesondere mittels Sauerstoffs, Abstechen der Schmelze unter Verbleib der unreduzierten Schlakke in der Pfanne oder im Konverter,
c) Zuführen einer weiteren Schmelze zusammen mit Reduktionsmitteln für die Schlacke, wie Kohlenstoff und/oder Silizium und/oder Aluminium,
d) Durchmischung der Schmelze mit der Schlacke und hierbei direkte Reduktion der Schlacke, insbesondere von Chromoxid, durch die Reduktionsmittel,
g) Abstechen der Schmelze und der reduzierten Schlacke.

7. Verfahren nach Anspruch 6,
**gekennzeichnet durch**,
einen Teilabstich der Schmelze beim Schritt b) unter Verbleib eines Metallsumpfes in der Pfanne;
eine Chargierung einer weiteren Schmelze auf den verbliebenen Metallsumpf und die Schlacke;
einen Teilabstich der Metallschmelze beim Schritt g) nach erfolgter Reduktion der Schlacke;
Wiederholung der Schritte des Chargierens und des Reduzierens der Schlacke für jede Schmelze der Kampagne oder Beendigung **durch** Vollabstich einer Abbauschmelze zusammen mit dem Metallsumpf.

## Claims

1. Method of recovering metallic elements, particularly metallic chromium, from slags which contain oxides, particularly chromium oxides, in an electric arc furnace, comprising the following steps:

a) feeding a charge to the electric arc furnace,
b) smelting in the charge with formation of a metal smelt and slag;
c) tapping off the smelt while leaving the unreduced slag in the furnace vessel;
d) feeding a further charge comprising scrap as well as reducing agent for the slag, such as carbon and/or silicon and/or aluminium,
e) smelting and direct reduction of the slag, particularly of chromium oxide, by the reducing agent from the charge during the smelting process; and
g) tapping off the smelt and the reduced slag.

2. Method according to claim 1, **characterised by** smelting in a build-up smelt at the beginning of a smelting campaign; partial tapping off of the smelt during step c) while leaving a metal sump in the furnace vessel; charging a further charge onto the remaining metal sump and the slag; partial tapping off of the metal smelt after melting and reduction of the slag have taken place; and repeating the steps of charging, melting and reducing the slag for each smelt of the campaign or terminating by complete tapping off of a broken-down smelt together with the metal sump.

3. Method according to claim 1 or 2, **characterised in that** the reducing agent carbon and/or silicon and/or aluminium are charged in the form of alloy materials with a high carbon content and silicon content.

4. Method according to one of claims 1 to 3, **characterised in that** residual dusts are charged as reducing agent for the slag which, in particular, contains chromium.

5. Method according to one of claims 1 to 4, **characterised in that** an intimate mixing by means of inert gases takes place, which gases are introduced by base flushing means and/or side nozzles into the electric arc furnace and/or by a top lance.

6. Method of recovering metallic elements, particularly metallic chromium, from slags, which contain oxides, particularly chromium oxides, in ladle or converter metallurgy, comprising the following steps:

a) feeding a first metallic smelt with slag into a ladle or a converter,
b) after treatment of the smelt, particularly by means of oxygen, tapping off the smelt while leaving the unreduced slag in the ladle or the converter,

c) feeding a further smelt together with reducing agents for the slag, such as carbon and/or silicon and/or aluminium,

d) intimate mixing of the smelt with the slag and thereby direct reduction of the slag, particularly of chromium oxide, by the reducing agents and

g) tapping off the smelt and the reduced slag.

7. Method according to claim 6, **characterised by**

partial tapping off the smelt in step b) while leaving a metal sump in the ladle;

charging a further smelt onto the remaining metal sump and the slag;

partial tapping off the metal smelt in step g) after reduction of the slag has taken place; and

repeating the steps of charging and reducing the slag for each smelt of the campaign or terminating by complete tapping off of a broken-down smelt together with the metal sump.

**Revendications**

1. Procédé de récupération d'éléments métalliques, en particulier de chrome métallique, à partir de scories contenant des oxydes, en particulier des oxydes de chrome, dans un four à arc électrique, comprenant les étapes suivantes :

a) amenée d'une charge dans le four à arc électrique ;

b) mise en fusion de la charge en formant un bain de métal en fusion et des scories ;

c) piquée du bain de fusion, les scories non réduites restant dans le récipient du four ;

d) amenée d'une autre charge qui contient des ferrailles ainsi que des agents réducteurs pour les scories, tels que du carbone et/ou du silicium et/ou de l'aluminium ;

e) mise en fusion et réduction directe des scories, en particulier d'oxyde de chrome, par les agents réducteurs à partir de la charge pendant l'opération de fusion ;

g) piquée du bain de fusion et des scories réduites.

2. Procédé selon la revendication 1,

**caractérisé par**

la mise en fusion d'un bain de constitution au début d'une campagne de fusion ;

une piquée partielle du bain de fusion dans l'étape c), un résidu de métal restant dans le récipient de four ;

un chargement d'une autre charge sur le résidu de métal restant et sur les scories ;

une piquée partielle du bain de fusion métallique après mise en fusion et réduction des scories ;

répétition des étapes du chargement, de la mise en fusion et de la réduction des scories pour chaque bain de fusion de la campagne ou achèvement par piquée complète d'un bain de fusion de terminaison conjointement avec le résidu de métal.

3. Procédé selon la revendication 1 ou 2,

**caractérisé en ce que**

les agents réducteurs que sont le carbone et/ou le silicium et/ou l'aluminium sont chargés sous forme de matériaux d'alliage à haute teneur en carbone et en silicium.

4. Procédé selon l'une des revendications 1 à 3,

**caractérisé en ce que**

l'on charge des poussières résiduelles à titre d'agents réducteurs pour les scories contenant en particulier du chrome.

5. Procédé selon l'une des revendications 1 à 4,

**caractérisé en ce que**

un mélangeage s'effectue au moyen de gaz inertes qui sont introduits par des buses de rinçage de fond et/ou par des buses latérales dans le four à arc électrique et/ou par une lance de sommet.

6. Procédé de récupération d'éléments métalliques, en particulier de chrome métallique, à partir de scories contenant des oxydes, en particulier des oxydes de chrome, dans la métallurgie de poche ou à convertisseur, comprenant les étapes suivantes :

a) amenée d'un premier bain de fusion métallique pourvu de scories dans une poche ou dans un convertisseur ;

b) après traitement du bain de fusion, en particulier à l'oxygène, piquée du bain de fusion, les scories non réduites restant dans la poche ou dans le convertisseur ;

c) amenée d'un autre bain de fusion conjointement avec des agents réducteurs pour les scories, tels que du carbone et/ou du silicium et/ou de l'aluminium ;

d) mélangeage du bain de fusion avec les scories et réduction directe des scories, en particulier d'oxyde de chrome, par les agents réducteurs ;

g) piquée du bain de fusion et des scories réduites.

**7.** Procédé selon la revendication 6,
**caractérisé par**
une piquée partielle du bain de fusion dans l'étape b), un résidu de métal restant dans la poche ;
un chargement d'un autre bain de fusion sur le résidu de métal restant et sur les scories ;
une piquée partielle du bain de fusion métallique dans l'étape g) après réduction des scories ;
répétition des étapes du chargement et de la réduction des scories pour chaque bain de fusion de la campagne ou achèvement par piquée complète d'un bain de fusion de terminaison conjointement avec le résidu de métal.

# Fig. 1

Schmelzen

Schmelzen/Reduzieren
(gilt für jede Schmelze in Kampagne)

| Aufbauschmelze ohne Sumpf | → Sumpf → | Schmelze mit Sumpf | → | Abbauschmelze mit Sumpf |

Abstich

Abschlacken    Abstich

Abstich